# EUROPEAN PATENT APPLICATION

(11) **EP 2 012 550 A1**
(43) Date of publication of application: **07.01.2009**
(21) Application number: 06732282.6
(22) Date of filing: 24.04.2006
(51) Int. Cl.: H04Q 7/38, H04B 7/26, H04J 11/00

(54) **RADIO BASE STATION APPARATUS**

(71) Applicant: Panasonic Corporation, Kadoma-shi Osaka 571-8501 (JP)
(72) Inventor: HAGA, Hiroki, 2-1-61 Shiromi, Chuo-ku Osaka 540-6207 (JP); HIRAMATSU, Katsuhiko, 2-1-61,Shiromi, Chuo-ku Osaka 540-6207 (JP); NAKA, Katsuyoshi, 2-1-61, Shiromi,Chuo-ku Osaka 540-6207 (JP)
(74) Representative: Grünecker, Kinkeldey, Stockmair & Schwanhäusser Anwaltssozietät
(86) International application number: PCT/JP2006/308572
(87) International publication number: WO 2007/122733

(57) **Abstract**

Even when terminals having different bandwidths require different amounts of BCH information, a radio base station apparatus in a scalable bandwidth system can transmit the BCH information required by the terminals. A base station (100) comprises a frame generating part (150) that generates a frame in which only common information directed to all of the terminals is placed in a band, which is assigned within a band having the largest one of the bandwidths supported by the base station (100) and has the smallest one of the supported bandwidths, and in which additional information different from the common information is placed in a band which is located within the band having the largest supported bandwidth and which is different from the band in which the common information is placed; and an RF transmitting part (180) that transmits the frame via a broad channel. In this way, even when terminals having different bandwidths require different amounts of BCH information, it is possible to transmit the BCH information requested by the respective terminals.

## Description

### Technical Field

The present invention particularly relates to a radio base station apparatus which is used in a scalable bandwidth system for performing multicarrier communication using supported bandwidths equal to or lower than a bandwidth of a plurality of bandwidths that radio base station apparatuses support, as a communication band for radio terminal apparatuses.

### Background Art

In the standards organization "3GPP," studies are underway on 3GPP RAN LTE (Long Term Evolution) to realize an improvement of systems of the current third-generation mobile phone. To perform multicarrier communication represented by the OFDM (Orthogonal Frequency Division Multiplexing) scheme, LTE proposes a radio communication system where a radio base station apparatus (hereinafter simply "base station") supports a plurality of bandwidths and, in the supported bandwidths, flexibly assigns bandwidths in which radio terminal apparatuses (hereinafter simply "terminals") actually perform communication. Such radio communication system is referred to as a scalable bandwidth system. Here, the LTE defines the bandwidths to support 1.25 MHz, 2.5 MHz, 5MHz, 10MHz, 15MHz and 20MHz.

In a current LTE standards conference, the method of transmitting a broadcast channel ("BCH") taking into account scalable bandwidth is discussed. Further, the bandwidth of a BCH, the bandwidth of a multiplexing position in the frequency domain and the time domain, and a transmission diversity method for a BCH are proposed.

Non-Patent Document 1 discloses a BCH configuration. To be more specific, as shown in FIG.1, all information that is transmitted on the BCH is divided into a plurality of information blocks, and these information blocks are alternately positioned in the time/frequency domain.

Thus, by transmitting the BCH in this manner, a narrowband terminal (e.g., a terminal that can receive only the minimum bandwidth of 1.25 MHz) can acquire all broadcast information by receiving the BCH for a certain period. Further, a terminal that can receive a wider band (e.g., a terminal that can receive 5 MHz) can demodulate many subcarriers and therefore receive all broadcast information earlier.
Non-Patent Document 1: R1-060358 "Considerations on E-UTRA Cell Search and Initial Access", Siemens

### Disclosure of Invention

### Problem to be Solved by the Invention

By the way, in a scalable bandwidth system, when the bandwidth which a terminal can receive becomes wider, the amount of broadcast information that needs to be broadcasted on the BCH may increase. That is, if the band which a terminal can receive becomes wider, the terminal may need to receive additional information. Although a case is assumed with the above conventional BCH where a narrowband terminal and a wideband terminal require the same amount of broadcast information, a case is not assumed where the amount of required broadcast information varies between terminals of varying bandwidths. Therefore, the above conventional BCH cannot transmit the amount of broadcast information which a wideband terminal requires.

It is therefore an object of the present invention to provide a radio base station apparatus which is used in a scalable bandwidth system and which can transmit required BCH information for individual terminals even when the amount of required BCH information varies between terminals of varying receiving bandwidths.

### Means for Solving the Problem

The radio base station apparatus of the present invention, which is used in a scalable bandwidth system for performing multicarrier communication using supported bandwidths equal to or lower than a bandwidth of a plurality of bandwidths that radio base station apparatuses support, as a communication band for radio terminal apparatuses, and which transmits a broadcast channel for the radio terminal apparatuses in a maximum supported bandwidth, employs a configuration having: a frame configuration section that configures a frame in which only shared information for all radio terminal apparatuses is positioned in a band of the minimum supported bandwidth apportioned in a band of the maximum supported bandwidth, and in which additional information different from the shared information is positioned in the rest of bands besides the band in which the shared information is positioned; and a transmitting section that transmits the frame with the broadcast channel.

### Brief Description of Drawings

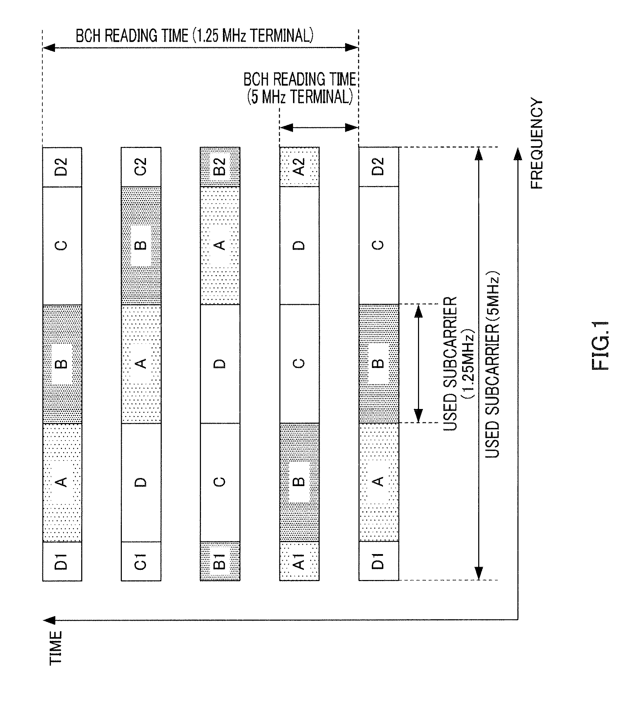

FIG.1 illustrates a configuration of a conventional broadcast channel (BCH);
FIG.2 is a block diagram showing a configuration of a base station apparatus according to an embodiment of the present invention; and
FIG.3 illustrates a BCH configuration according to an embodiment of the present invention.

### Advantageous Effect of the Invention

According to the present invention, it is possible to provide a radio base station apparatus which is used in a scalable bandwidth system and which can transmit required BCH information for individual terminals even when the amount of required BCH information varies between terminals of varying bandwidths.

### Best Mode for Carrying out the Invention

An embodiment of the present invention will be explained below in detail with reference to the accompanying drawings.

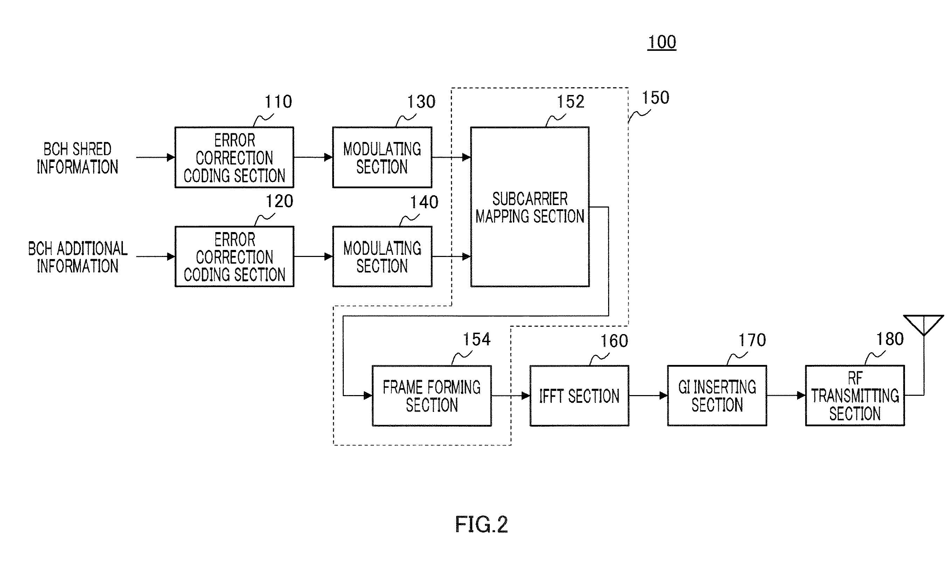

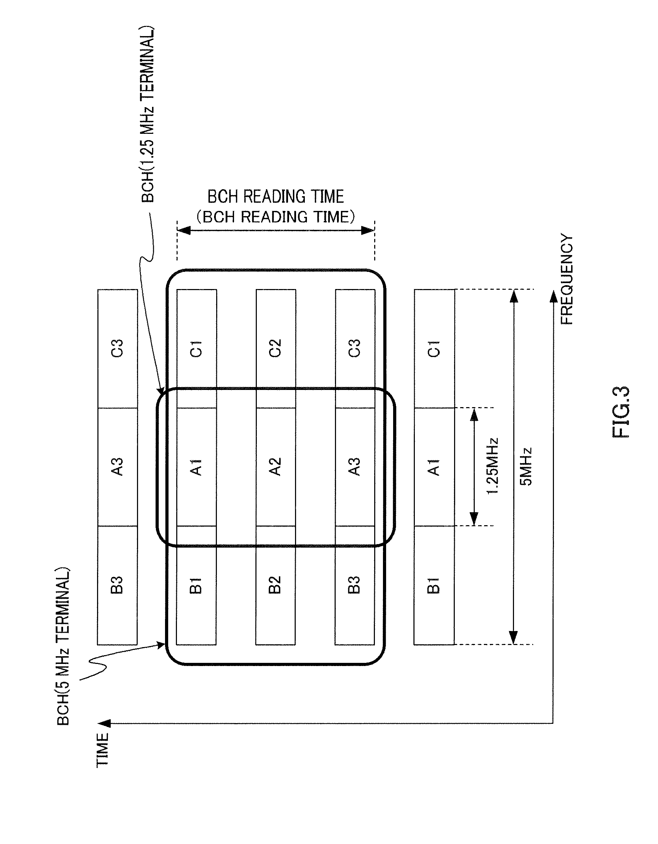

FIG.2 illustrates a configuration of a radio base station apparatus (hereinafter "base station") used in the scalable bandwidth system of the present embodiment, and FIG.3 illustrates a configuration example of a BCH transmitted from base station 100.

Similar to a base station in a general scalable bandwidth system, base station 100 performs OFDM communication with terminals using a bandwidth equal to or lower than a plurality of bandwidths the radio base station apparatus supports, as a communication band for the terminals.

Base station 100 is configured with error correction coding sections 110 and 129, modulating sections 130 and 140, frame configuration section 150, IFFT (Inverse Fast Fourier Transform) section 160, GI (Guard Interval) attaching section 170 and RF transmitting section 180.

Error correction coding section 110 performs error correction processing on shared information for all terminals under base station 100, and transmits the shared information acquired after error correction coding to modulating section 130. Modulating section 130 performs modulating processing such as QPSK (Quadrature Phase Shift Keying) and 16QAM (Quadrature Amplitude Modulation) on the shared information after error correction coding, and transmits the acquired modulated signal to frame configuration section 150.

Error correction coding section 120 performs error correction processing on additional information (BCH additional information in FIG.2) that is transmitted on the BCH, and transmits the additional information acquired after error correction coding, to modulating section 140. Modulating section 140 performs modulation processing such as QPSK (Quadrature Phase Shift Keying) and 16QAM (Quadrature Amplitude Modulation) on the additional information acquired after error correction coding, and transmits the acquired modulated signal to frame configuration section 150. Here, while shared information is information which all terminals require regardless of the bandwidths for the terminals, additional information becomes necessary when the bandwidth a terminal can receive becomes wider.

Frame configuration section 150 configures a frame in which shared information is positioned in a band of the minimum bandwidth apportioned in a band of the maximum supported bandwidth, and in which additional information is positioned in the rest of the bands besides the band in which shared information is positioned in the band of the maximum supported bandwidth.

In FIG.3, the maximum supported bandwidth which base station 100 supports is 5 MHz. Shared information (A1 to A3) is positioned in a band of the bandwidth which is minimum in the supported bandwidth (1.25 MHz) and which is apportioned in this 5 MHz band. Further, additional information (B1 to B3 and C1 to C3) is positioned in the rest of the bands besides the band in which shared information is positioned, in the 5 MHz band. Further, although a case is described with this figure where the band which has the minimum bandwidth and in which shared information is positioned, is located on the center of a band of the maximum supported bandwidth, this positioning is not limited. For example, it is equally possible to position shared information in a band of the highest or lowest frequency which is located on the edge of the maximum supported bandwidth.

To be more specific, frame configuration section 150 is configured with subcarrier mapping section 152 and frame forming section 154. Subcarrier mapping section 152 forms a data symbol in which modulated shared information and additional information are mapped on appropriate subcarriers, and transmits the data symbol to frame forming section 154. Frame forming section 154 forms a transmission frame by adding a pilot channel, synchronization channel, etc. to the data symbol from subcarrier mapping section 152.

The frame configured in frame configuration section 150 is processed in IFFT section 160, inserted a guard interval in GI inserting section 170, subjected to predetermined radio processing such as digital analog conversion processing and up-conversion to a radio frequency in RF transmitting section 180, and outputted from an antenna.

The operation of BCH reception at terminals varies depending on the bandwidth which the terminal can receive. A terminal that can receive only the minimum bandwidth acquires required broadcast information by receiving the shared information of the BCH (A1, A2 and A3 in FIG.3) mapped in the minimum bandwidth, for a predetermined time (BCH reading time). A terminal that can receive a wider band acquires a substantial amount of broadcast information, by receiving additional bands in which additional information of the BCH (B1, B2, B3, C1, C2 and C3 in the figure) is mapped, for a predetermined time.

As described above, according to the present embodiment, base station 100 is provided with: frame configuration section 150 that configures a frame in which shared information for all terminals is positioned in a band of the minimum supported bandwidth apportioned in a band of the maximum supported bandwidth among the bandwidths supported by base station 100, and in which additional information different from the shared information is positioned in the rest of the bands besides the band in which the shared information is positioned; and RF transmitting section 180 that transmits the frame on the broadcast channel.

By this means, it is possible to transmit required BCH information for individual terminals even when the amount of required BCH information varies between terminals of varying bandwidths. Further, shared information for all terminals is transmitted in the minimum supported band and additional information is transmitted in bands other than the minimum supported band, so that a terminal that is capable of receiving only a bandwidth equivalent to the minimum supported bandwidth can acquire shared information by receiving the minimum supported bandwidth, and a terminal that has a greater receiving capacity can receive additional information besides shared information by receiving the both bandwidths. As a result, it is possible to transmit the amount of information in accordance with the receiving capacity of a terminal (i.e., in accordance with the bandwidth which a terminal can receive), to a terminal.

Further, the above additional information may be parity information for performing error correction coding for shared information. In this case, error correction coding section 120 of base station 100 is unnecessary, and modulating section 140 receives as input, for example, parity information which is an encoded sequence of shared information subjected to convolution-coding in coding section 110.

Thus, by using parity information as additional information, when a terminal has a greater receiving capacity (i.e., when a terminal can receive a greater bandwidth), the terminal can receive shared information more accurately.

### Industrial Applicability

The radio base station apparatus according to the present invention is applicable as a radio base station apparatus which is used in a scalable bandwidth system and which can transmit required BCH information for individual terminals require even when the amount of required BCH information varies between terminals of varying receiving bandwidths.

## Claims

1. A radio base station apparatus which is used in a scalable bandwidth system for performing multicarrier communication using supported bandwidths equal to or lower than a bandwidth of a plurality of bandwidths that radio base station apparatuses support, as a communication band for radio terminal apparatuses, and which transmits a broadcast channel for the radio terminal apparatuses in a maximum supported bandwidth, the radio base station apparatus comprising:
a frame configuration section that configures a frame in which only shared information for all radio terminal apparatuses is positioned in a band of the minimum supported bandwidth apportioned in a band of the maximum supported bandwidth, and in which additional information different from the shared information is positioned in the rest of bands besides the band in which the shared information is positioned; and
a transmitting section that transmits the frame with the broadcast channel.

2. The radio base station apparatus according to claim 1, wherein the additional information comprises parity information.
